# EUROPEAN PATENT SPECIFICATION

(11) **EP 2 167 707 B1**
(45) Date of publication and mention of the grant of the patent: **16.01.2019**
(21) Application number: 08766909.9
(22) Date of filing: 02.06.2008
(51) Int. Cl.: C25B 15/08, C01B 3/04, C01B 3/34, F04D 29/42, C25B 1/04, C25B 1/12, C02F 1/46, C25B 9/12

(54) **DEVICE AND METHOD FOR PRODUCTION OF HYDROGEN**
VORRICHTUNG UND VERFAHREN ZUR HERSTELLUNG VON WASSERSTOFF
DISPOSITIF ET PROCÉDÉ POUR LA PRODUCTION D HYDROGÈNE

(30) Priority: 31.05.2007 NO 20072793
(43) Date of publication of application: 31.03.2010
(73) Proprietor: RotoBoost AS, 3117 Tønsberg (NO)
(72) Inventor: SKOMSVOLD, Åge, Jørgen, N-3117 Tønsberg (NO)
(74) Representative: Oslo Patentkontor AS
(86) International application number: PCT/NO2008/000194
(87) International publication number: WO 2009/145635

(56) References cited:
- EP-A1- 1 616 980
- WO-A1-2007/061319
- WO-A1-2007/086796
- WO-A1-2008/088225
- WO-A2-00/35560
- JP-A- 56 096 084

## Description

### Field of the Invention

The present invention relates to the production of clean hydrogen gas at high pressure or in liquefied form.

### Technical Background

Today it is very energy demanding to produce hydrogen, when the whole energy usage is estimated from raw material to compressed or liquefied hydrogen. With today's technology the hydrogen will be 20-30% more expensive than alternative fuels like gasoline, diesel etc. with the same energy content.

At the same time the most effective production units are large, complicated and expensive. They also demand frequent maintenance which contributes in making produced hydrogen more expensive.

Today most of the hydrogen production is accomplished by steam reforming where the residue CO₂ is released to the atmosphere, which is climatic destroying. Research is made on how to handle this problem and with known technology it will demand 20-30% equivalent the energy in hydrogen to deposite CO₂ in for example hydrocarbon reservoirs, where it can be extracted more hydrocarbons at the same time.

When heat is needed during the hydrogen production, it is researched on being able to recycle the thermal energy, which they have managed at MIT with totally 95 %.

In an earlier Norwegian patent application 20064407 it is described a device and method for hydrogen production by electrolysis. The device contains a compact rotating hydrogen production unit which can deliver separated gas pressurized from the device supporteded by control valves at the outlet of the device. However, the control valves and slip chambers established at the ends of the shafts could be exposed to quick wear, leaking and friction.

### Summary of the Invention

The present invention provides a device and a method for production of hydrogen from a split medium such as water, electrolyte or hydrocarbons independently, or mixed, or supported by catalysts in an electric field, where produced H₂, O₂ and CO₂ is effectively separated, where the gases have a higher pressure out of the device than the pressure on the split medium supplied to the rotating device. The device can also be configured as an engine.

According to the invention the device is compact, effective and has a high production rate and throughput rate.

The advantages of the invention are due to the electrolysis cell rotating in such a way that the gases are produced under high G conditions. The high G means that the gas bubbles, which are produced by the splitting, become small and rapidly separated from the split medium. Then sufficient split medium will rapidly flow to and barely cover the electrodes all the time, why the device is designed with small electrodes but will however produce gases with high throughput rate. The device is also constructed so it can be able to operate above super critical pressure and temperature (over 222 bar and 374°C). Then, produced steam will have a much higher density than hydrogen and can be easily separated and wherein very little or none remnant steam is left in the gases. The device delivers the gases at normal storing pressure and/or liquefied. The rotation is achieved by means of the pressurized gases passing through separate/joint nozzles for each/all gas, to individual/joint spiral-diffusor(s) which is arranged such that some or all of the gases change phase to ice or into liquid form, and the gases fractionizes inside section chambers in evaporation order. Heat and cold which is produced during the process is recycled inside and outside of the device. Recycled cold- or liquid inert gas could be added in adjusted proportions to the cell after the splitting to lower the temperature, and to prevent the gases from oxidizing. Inert gas has to be added in a much larger amount than the produced gas, and because of the heat the inert gas exits at a higher pressure which can be energy transformed with a energy transforming device.The transformed energy could be added to the actual invention, for instance: supplying some electricity to the electrodes, pressurizing of input substance and providing rotation. By regulating the amount of inert gases, the production gases may be allowed to combust and by adding more fuel and oxygen to the combustion, the energy transformation can be increased and the device becomes a motor.

The scope of the invention is defined in the appended claims.

### Short Description of the Drawing

The invention will now be described in detail in reference to the appended drawing, in which:

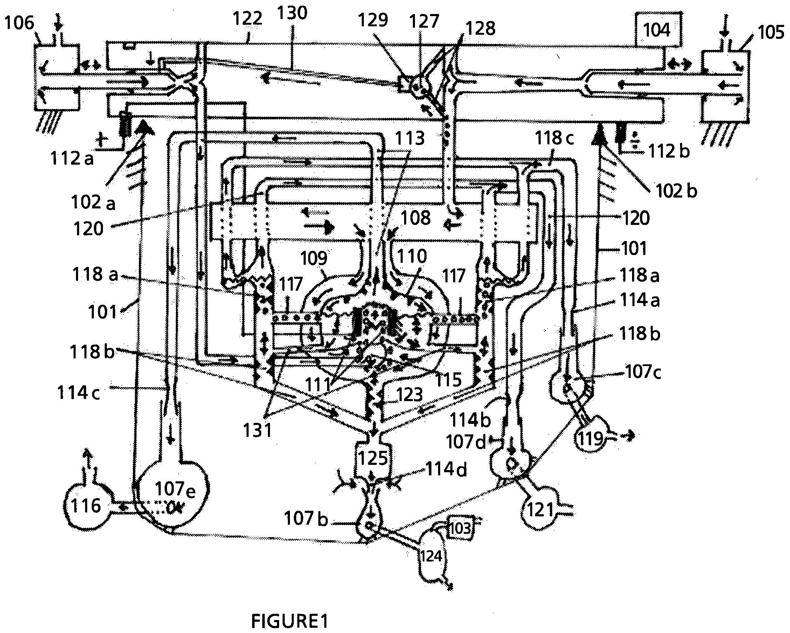

Fig. 1 shows an embodiment of the invention, where a longitudinal section of the shaft and one half of the rotation device, anchored vacuum housing and diffusor-spiral are shown; the other half is a mirror image of the half structure witch is shown along the one side of the shaft.

### Detailed Description of the Invention.

Fig. 1 shows the principal parts of the invention, namely a fast rotating hydrogen producing pressure unit which is suspended in a stationary vacuum housing 101 with sealed bearings 102a, 102b placed at the ends of the shaft of the unit. The hydrogen producing unit contains an electrolysis cell 110 arranged at the periphery of the unit. The cell 110 is designed to split water, electrolyte, hydrocarbons, or mixtures of this, which is supplied via channels in the shaft. To the vacuum housing it is also fastened diffusor-spirals (as in centrifugal compressor) 107b-c-d-e, where produced gas and substance leaving from the cell 110 separate into separate channels for each production gas/substance to separate nozzles 114a-b-c-d. The nozzles form a line/circle 114a-b-c-d on the rotation device/shaft for each production gas/substance and are fitted inside said diffusor-spiral with little distance between the outer wall of the nozzle and the inner wall of the diffusor. The gas pressure from the nozzles in the circle causes the rotation of the device. The unit can be rotated supported by an alternative motor 104 which can be connected onto/off the shaft. Vacuum/low-pressure is established inside the protective evacuated housing 101 with a vacuum pump 103 where the air and/or gas is sucked out through a density regulating valve 114d and diffuser inner wall 107b into a channel to a sediment accumulating tank 124 where the vacuum pump 103 with a check valve is connected via a channel. During gas production low pressure will be created between the other nozzle circles 114a-b-c and their diffusors' inner walls 107c-d-e which maintains vacuum/low pressure within the protective house 101. The vacuum prevents air resistance on the rotation unit, and insulates the unit from heat loss and noise. Recycling and adjusting of split medium from the cell 110 can be done via nozzles 114d and spiral diffusor 107b at the periphery, where split medium is dynamically pressurized. The split medium is adjusted to the right temperature and mixture before it is pressed back into the inlet 105. The split medium can also be led into a separate channel (not shown) from the cell 110 in the shaft to a separate nozzle-circle (this is mentioned later) and over to a diffusor-spiral. When the split medium from the cell gets a lower density than the split medium supplied to the cell, the pressure at the outlet will be higher than the pressure at the inlet. Then the split medium will give rotation force when the nozzles in the nozzle circle is adjusted pointing backwards in the rotation direction. Or when the nozzles are adjusted more radially, the pressure is boosted more for deliverance to recycling as said.
When rotation starts, the water/electrolyte will be pumped under high pressured into the injection nozzle 105, where the split fluid (for example water/electrolyte) is pumped through a needle nozzle with an attached Zimmer ring (for tightening) arranged in adjusted channel in the centre of the axle ends. The fluid is injected according to the injector principle into the shaft channel where the fluid is branched into several sink channels along to a secondary heat exchanger 108 (where hot gases from the split cell supply heat to the fluid) and further to a main heat exchanger 109 (which is surrounding the split cell 110) and afterwards to the split cell 110. One of the electrodes 111 in the split cell 110 is supplied with DC electricity via an insulated conductor from connector 112a at one of the shaft ends and when the device is electric conductive one of the electrodes could be in contact with the device and connector 112b on the other shaft end.
By supplying an electrolyte fluid to the cell 110, and with a low voltage between the electrodes 111, produced hydrogen will float/rise towards the shaft and separate fast into the hydrogen channel 113, flow through the secondary heat exchanger 108 and via the channel further to the nozzles 114c at the periphery where the hydrogen gas flows rapidly over to a diffusor-spiral 107e along to accumulator 116 pressurized and/or liquefied (depending on the pressure/temperature before the nozzle circle 114c and the pressure/temperature at the end of the diffusor-spiral 107e, and the same relation stands for all of the production gases independent of the production method). The nozzles in the nozzle circles 114a-b-c are adapted to regulate the pressure, rotation and the flow of the production gases to accumulators 119, 121, 116 via its diffusor-spirals 107c-d-e. Oxygen is taken out through channels 117 on the sides at the same levels as the top of the electrodes 111, and out of the split cell 110 in corresponding oxygen channels 117 through main heat exchanger 109 whereupon the oxygen from each side is gathered in an oxygen channel 118a, fed through secondary heat exchanger 108, whereupon the oxygen channels 118a are gathered from each side into a common oxygen channel 118c which leads to each nozzle in the nozzle circle 114a at the periphery where the oxygen is pushed with high speed into the diffusor-spiral 107c and to the accumulator 119 pressurized and/or liquefied/condensed. Hydrogen substances in the oxygen channel 118a are separated into dedicated channels 120 via secondary heat exchanger 108, nozzle at the periphery 114b, diffusor-spiral 107d and accumulator 121. The pressure of the gases out of the oxygen channel 118a can be lower than the pressure on the hydrogen in the channel 113 from the cell 110, and then the level of water/steam will rise a bit in the oxygen channel 118a (above critical pressure) and when the level in the cell 110 is equal to or below the corresponding oxygen channels 117, then the gas substance from the cell 110 will bubble or flow into the oxygen channel 118a. Liquid mediums from the cell will flow through the sediment channel 131 and when water/steam/hydrocarbon-residue /CO(₂)- residue comes mixed, the mixture may come in contact with a row of catalyzers to help catalyzing when its needed.
During water electrolysis, and at so high pressure that the O₂ becomes heavier than the electrolyte, the O₂ will sink rapidly out to the periphery (thus opposite way of H₂), and then it is removed through density regulation valve 125 at the periphery, to the nozzle 114d where O₂ is hurled over to a diffusor-spiral 107b and then along to accumulator 124 liquefied. Or the liquefied and cold oxygen is brought back to the rotation arrangement via the shaft cooling the H₂ before it is leaving the device.The H₂ can also be liquefied this way and the O₂ can also cool the rotation arrangement to maintain strength. The liquid O₂ evaporates because of heating and could either be brought out through a channel from the shaft axially to the diffusor, or radially to a separate diffusor-spiral, with higher pressure then the O₂ had into the arrangement because of the density difference through the process as said. By using this method it is possible to achieve totally clean H₂ and O₂.

At heat splitting of pure water which is heated up by increasing the voltage/electric current between the electrodes 111, the electrodes can be made of nickel, zirconium, iridium, composite substance or nano technology material, or a combination of said materials. Chemicals/catalysts such as electrolyte, iodides and bromides or equivalent materials can also be added to the split medium at the input line from the nozzle 105 to reduce the split temperature. Hydrogen and oxygen is produced by the ionising of the split medium and by the heat which is created. When the split medium (water) is supplied with materials and catalyzers in the split cell to lower the split temperature (which can be relative low), the H₂ and O₂ will not react with each other (combust) when they leave the catalysts. The lowered temperature will diminish the split limit in the water/steam, with the result that the production gases (H₂ and O₂ in this case) will be separated in the cell 110, and will be conducted out the same way as said above by electrolysis and electrolyte.Possible slag/sediment material or material with higher density than the water/steam is hurled out at the periphery via channels 118b, 123, 131 from the cell and oxygen channels 118a through a density regulating valve 125 and nozzle 114d out into the diffusor 107b and to accumulator 124. Nozzle 114d for slag material can be adjusted to allow slag material and some of the split material to pass. By this arrangement the density regulating valve 125 is less needed.
In both the water electrolysis- and heat split process the production gases H₂ and O₂ can be led out gathered/mixed (not shown) via the rise channel 113 and the oxygen channel 117, or one of the said channels. To prevent oxidation of the production gases, they could be mixed with an inert gas, for example CO₂, which could be cooled/liquefied, and which can be added in a adapted amount in the line from the inlet 106 and to (now) inert gas distributor 115 where the gas rises between the electrodes 111, or on the outer side of them, or in channels through the electrodes to adjust cooling. The inert gas comes out of the electrodes at the top, where the inert gas from each electrode is guided to each other over the production gases which will mix with it in the cell 110. Or from a dedicated channel at the shaft via the periphery and up to the inert gas channels in the electrodes 111, or to the cell 110, where the inert gas can be supplied to the top of the electrodes 111 at high speed from a row of nozzles along the circle round the shaft, and which could be placed on each side of the hydrogen channel 113 and between that channel and the oxygen channel 117. With an inert gas solution, it is less need for outlet channels on the side 117, 131 or from top 113 of the cell 110 with following connections. The pressure and temperature in the gas mixture is adjusted in such a way that it will exit from the end of the diffusor-spiral 107e, where CO₂ is taken/fractionized out as ice, O₂ as liquid and H₂ as cold gas. Or the CO₂ and O₂ are pumped, in a liquid state, further along for separation in evaporation order in module chambers for this purpose. The H₂, which is in a state of gas, can be compressed further.
In said solution for inert gas, the production gases can also be allowed to burn in the inert gas in the cell, when the mixture ratio is adjusted for this purpose. There can also be added suitable amounts of fuel and oxygen from the same area as said inert gas nozzles (electrodes or cell wall) to increase the capacity when the gases is led through the nozzles, or a turbine for energy transforming and the unit becomes a engine. When the water evaporation can be condensates fed back to the cell as said, it could be practically only inert gas, which can be CO₂, which after said turbine can condensate to liquid or dry ice, where some of it is pumped/led back to the cell liquefied or as a cold gas, so that some the inert gas is sealed in the circuit, and the residue is deposited. Said engine solution can also be combined with steam reforming as said below.
The rotation device can be connected in front of and/or after a separate cooling arrangement (not shown) to gain sufficient cooling-energy in some cases so that some of the production gases can be liquefied, or become ice or that gases like O₂ is fractionated out for further use in the invention. Said cooling arrangement can also be combined with the cooling production from the actual invention for further effect.
In the steam reforming process hydrocarbons will be as added to the water/steam (and possible other favourable materials added for splitting) which is injected at high pressure via channels into the split cell 110 from the nozzle 105.The hydrocarbons (cooled or liquefied) will be supplied simultaneously at high-pressure in the line which starts at the injection nozzle 106 (similar to the injection nozzle 105 from the opposite shaft end) with a needle nozzle which have a Zimmer ring mounted on it, and adjusted for the channel in the centre of the shaft 122, where the hydrocarbons are injected in adapted amounts and pressure into the shaft channel where the hydrocarbons are ramified into multiple sink channels which lead to the hydrocarbon distributor 115 in the primary heat exchanger 109, where the adapted amount is added to the water/steam (which can be mixed with other materials for less split energy) in the split cell 110 under the electrodes 111, Water/steam and hydrocarbons in adapted amounts will rise up between the electrodes, where adapted voltage/current between the electrodes will provide both necessary heating and (which is recycled) and ionizing at sufficient voltage/current. Some of the supplied hydrocarbons will oxidize with the oxygen from the oxygen electrode, which will increase the temperature further. With the right catalyzers on/in the electrodes 111, the cell 110, the channels 113, 117, 118a-b, 123, 131 from cell 110, where catalyzers are adjusted for the current pressure and temperature, then the split medium will in the end be transformed into H₂ and CO₂ after ended water change reactions in said outlet channels from cell 110. In said outlet channels from cell 110 the temperature is adjusted with the heat exchangers 108, 109 where one of them also can enclose and cool said outlet channels from the cell 110, where some steam can condensate back to the cell 110. Most of the H₂ is separated out in the channel 113 from the split cell 110 where the channel is conducted through the heat exchangers 109, 108 and could ramify to the nozzles 114c in the nozzle circles at the periphery (or an equal number of channels from the cell 110 as the numbers of nozzles in the current nozzle circle. The same alternative is for the other gases from CO₂/oxygen channel 118a) over to a diffusor-spiral 107e further to accumulator 116, pressurized and/or liquefied. From the cell 110 the other produced gases, hydrogen carbon residue, some water/steam and small residue of H₂ are led on both sides of the cell 110 over to an axially corresponding CO/CO₂ channel 117 (earlier corresponding oxygen channel) to CO₂ channel 118a-b (earlier oxygen channel) where residue in the mixture is catalysed/transformed to more H₂ and CO₂, where H₂ from both sides along the channel through the secondary heat exchanger 109 rises into a dedicated common channel 120 which leads H₂ to the nozzle 114b, a diffusor spiral 107 and accumulator 121, pressurized and/or liquefied. The CO₂ and possible other spin-off-products are simultaneously conducted from a side channel on the top of the CO₂ channels 118a from both sides through a channel in the heat exchanger to a common CO₂-channel which leads the CO₂ to the nozzle 114a and further to the diffusor-spiral 107c and to the accumulator 119, pressurized and/or liquefied.
Fluids or materials with higher density than the electrolyte/water/steam are removed through adjustable density difference regulating valves 125 alongside the periphery, to the following nozzles 114d where the material is hurled/pressed over in to a diffusor-spiral 107b and further to accumulator 124.
There can be more disc structures and/or electrodes on the same shaft with a common inlet channel 105, and outlet channels 113, 118c, 120 for each material connected together, except the slag nozzle 114d with the associated diffusor-spiral 107b and disc structure.Alternatively, sediment materials can be collected in a common, or fewer outlet nozzle(s) when the inner wall along the periphery resembles one or more shortened cones, where a row of nozzle is placed along the periphery where the cone form(s) diameter is biggest. The vacuum pump can be mounted on a slag-tank 124 or connected directly to the vacuum housing with a supply channel (it can be done also with just one disc structure). Power/voltage to the electrodes can be connected bipolar in series or parallel.

### Detailed description of individual components in the device.

### Arrangements of the catalyzers 110, 113, 117, 118a-b, 123

The walls in the split cell 110 and channels 113, 117, 118a-b, 123 could be covered with or composed of a row of catalyzers (which could be nickel, copper, zinc, zirconium, platinum, rhodium etc.) which work on hydrocarbon residue to pull out more hydrogen from the hydrocarbon substance and similarly transform/catalyze carbon monoxide to carbon dioxide. Channel areas and walls are as follows: The inner walls of the cell 110, hydrogen channel 113 to pass the secondary heat exchanger 108, oxygen channels 117, 118a-b (possible carbon dioxide channels), dedicated hydrogen channel 120 to pass the secondary heat exchanger 108, sediment channels 123, 131. The electrodes can also be catalytic with catalyzers which are especially effective and adapted for the voltage, where the split medium will be ionized and the catalyzers on/in the electrodes can for example be nickel or zirconium or a combination thereof, or other catalyzers. The catalyzers can also be adapted to high temperature and pressure.

### Ventilation arrangement 127, 128, 129, 130

By means of air or gas in the split medium in the channel in the shaft 122 from the regulating pump nozzle 105 where air can enter, and from sink channels, gas may arise in the split medium channels from the periphery, where air/gas channels 128 are connected and which ramifies into a gas pocket chamber 127 in the centre of the shaft 122. In the gas pocket chamber 127 there is a float ball 129 (or another adapted valve) which opens to channel 130 when gas/air is in the gas pocked chamber 127 leading to the inner side of the Zimmer ring for the regulating pump valve 106 where it is low pressure during production, and where cooled liquefied gas is injected from the nozzle, and will therefore drag along gas/air from channel 130 on which they also becomes liquid (when the hydrocarbon gas is enough cooled down and amount) and leads with that down to the split cell 110 where the gas after the electrodes 111 will be separated in to its outlet channels.

### Regulation of the pressure with the nozzles 114a-b-c

The nozzles 114a-b-c can be adapted for constant gas rate and pressure based on continuously gas production rate, and the pressure in the gases is favourable when the surface of the split medium is held at the corresponding oxygen/CO₂ channels 117 on each outer side of the electrodes 111. Or the nozzles can be automatic adjustable for the gas rate but is only open on the said favourable pressure. The pressure at the nozzles 114a-b-c is established by the pressure of the fluid in channels and shaft 122 via the regulating nozzles 105, 106 and the periphery velocity at the surface of the fluid in the cell 110, and the density difference between the fluid and the gas for each channel out and relative gas-pillar pressure (height on the cold gas-pillar with high density from the nozzle against the shaft minus the height on the warmer gas pillar with lower density against the shaft from the cell or oxygen-/CO₂-channel 118a).

### Primary heat exchanger 109 and secondary heat exchanger 108

The embodiments of the secondary heat exchanger 108 and the primary heat exchanger 109 can on the outer side be similar and look like a pipe put together in a circle with the same distance to the shaft 122 and in cross section on it and in balance, where the primary heat exchanger 109 lies in a ring just outside the secondary heat exchanger 108.They can be fastened to each other, and also contribute in binding the structure in the rotating unit together.There is either hollow spokes or a massive disc which is fastened on the inside of the circle on the secondary heat exchanger 108 and the shaft 122 where supply channels from the shaft could be inside or outside. Or the secondary heat exchanger 108 can be oval or rectangular on the tangential cross section and where the top (the inside of the circle) could be fastened directly to the axle. The gas channels 113, 118c, 120 can be brought out on the sides by the top of the secondary heat exchanger 108 in favourable points, where the gases is led to the nozzles 114 a-b-c.
In the secondary heat exchanger 108 the sink channels from the channel in the shaft 122 with split medium (water/electrolyte) from the pressure regulating nozzle 105 is led preferably distributed close to the shaft, and the outlet for the split medium can be at the bottom (periphery of the secondary heat exchanger 108) and enclose H₂ channels where the split medium is led outwards and into the top of the primary heat exchanger 109 where the split medium is pushed down (out towards the periphery) and the same on each outer side of the cell wall 110 to get more even heat exchange. When the split medium transfers out to the periphery in the heat exchangers 108, 109 the moment of inertia in the tangential acceleration of the split medium makes the tangential speed relative high in the heat exchanger circles 108, 109.This leads to a favourable heat exchange against the gases which moves with high speed in a tangential opposite direction in channels which can be pipe spirals in the secondary heat exchanger 109 and against the wall in the cell 110, which involves efficient heat exchange from the warm gases to the colder split medium. The same tangential movements will occur for materials moving to and from the periphery at other places in the rotating device, as in the cell 110 between the electrodes 111, where the split medium/gases have a high buoyant velocity towards the shaft, and thus will get a relative high tangential speed in the electrode circle 111. The split medium which passes the electrodes without splitting will flow over the electrodes on the outer side thereof, where the split medium moves outwards to the periphery and thereby in a tangential opposite direction of the medium between the electrodes 111.These movements is very favourable for the split and heat exchanging processes, which means that the electrodes 111 can be small, and the cell 110 little, but still with high throughput and production.

Channels for remaining production gases (O₂,H₂ from other gas rise channels, CO, CO₂ etc.) are led into the bottom of the secondary heat exchanger 108 on favourable points evenly distributed, and all the gas channels continues in the secondary heat exchanger 108 which can be in multiple pipes separated for each gas component, and the pipes are arranged along the secondary heat exchanger 108 and bended backwards in the rotation direction in a spiral towards the top of the secondary heat exchanger 108, then the gases which will try to remain the periphery speed will be pushed more tangentially along the pipes towards the shaft, which makes the pressure loss of the centrifugal force smaller when they leave the rotation device (nozzles).

### Oxygen-/CO₂-channels 118a-b

The embodiment (not shown) of the oxygen/CO₂-channels 118a-b can be like that they enclose the primary heat exchanger 109 where the medium in the oxygen/CO₂-channels 118a-b is in direct contact with the outer wall on the primary heat exchanger 109. The outer walls of the oxygen/CO₂-channels 118a-b are attached in the top (closest shaft) to the outer side (periphery) of the secondary heat exchanger 108.The primary heat exchanger 109 can be attached at the bottom, where they also can be closest together. The bottom of the oxygen channels 118b from each side goes into a sink channel 123 which now becomes really short, and is more like a row with holes through the primary heat exchanger.In each hole in the oxygen/CO₂-channel 118, on the same place along the periphery, there is mounted a density regulating valve 125 with the following nozzle 114d. Slag outlet channels 131 from both sides of the cell come out as shown on the figure as a row of channels along the circle of the oxygen/CO₂-channel 118b with the same distance to the shaft. The same is concerned for the corresponding oxygen channel 117 and from the exit of them and up, there is now an oxygen/CO₂-channel 118a, and the outlet channel for the oxygen/CO₂ from both sides is most favourable to put in a channel on the top on the same row as the hydrogen channels 113 between the heat exchangers 109, 108 where a row of pipe went from the top of the outer sides wall of the primary heat exchanger 109 and into the secondary heat exchanger 108 where the oxygen/CO₂ is conducted. From the top of the oxygen/CO₂-channel's 118a outer wall, there is a row of outlet channels for H₂ which is conducted into the secondary heat exchanger 108. There can be equal amounts of channel accomplishments for each gas at the periphery of the secondary heat exchanger 108. When oxygen-/CO₂-channels enclose the primary heat exchanger 109 it will simultaneously create buoyancy which can be exploited entirely or partially in balance. The walls between O₂/CO₂-channels and primary exchanger 109 and between it and the cell 110 can also be relative thin when it's about the same pressure on each side of the walls. This will also improve the heat exchange. In this case it will be the outer walls on the oxygen/CO₂-channels 118a, 118b which becomes most massive and to be designed to stand against the high pressure and the centrifugal forces.

### The nozzles 114a-b-c-d

Every nozzle circle which isn't projecting from the periphery, as for instance slag nozzle 114d, can have a radius ranging from the shaft and out to the same radius as for the slag nozzle 114d. The embodiment of the nozzles 114a-b-c can be classical convergent round or square in section in a connected circle against the inner wall of the diffusor-spiral for each gas. Or the nozzles can be like expansion nozzles ("Laval" nozzles), and irrespective of of the nozzle type, they can be fitted on the sides of the secondary heat exchanger 108 and the primary heat exchanger 109 to bind the structure in the rotating unit together, and/or directly to the shaft 122 where for example Laval nozzles for each gas are placed in a connected circle/disc around the shaft where the nozzle pipes is turned backwards in the rotation direction. The periphery of the connected nozzle pipes creates a circle where the distance from the shaft is identical, and the outer walls at the periphery of the nozzle pipes are in the same cross section as the shaft.Then the section of each outlet will be rectangular.

The diameter of the nozzle circle/disc has to be adjusted in proportion to the outlet velocity and the amount of the actual gas and the velocity of the periphery to its nozzle row. For the light gases the exit velocity will be many times faster than the velocity of the periphery, so that the resultant velocity of the gas into the diffusor is going to be relative high. At least one of the nozzle circles 114a-b-c is arranged to push-force in the rotation direction. The material waste nozzle 114d could be a row of converging nozzles, of square nozzles favourable placed at the periphery of the rotating device, and which can turn radial from the periphery out to the diffusor-spiral 107b.

### Diffusor-spirals 107b-c-d-e

The embodiment of the diffusor-spirals 107b-c-d-e, which are mounted in the vacuum housing 101, do not rotate and they are arranged around the rotating unit where the outer side of the nozzle wall for each gas is arranged facing the inside of the diffusor wall to each gas diffusor-spiral with little clearance, and they look like the diffusor-spiral of a centrifugal compressor. During gas production, low pressure is formed between each nozzle row (circle) which maintains vacuum/low pressure within the vacuum protection housing 101. The diffusor-spirals' purpose is to convert the dynamic pressure (motion pressure) of the gases to static pressure. From the diffusor-spiral 107b to the slag nozzle 114d, the diffusor-spiral is going to be identical, where the spiral increases in sectional area with the rotation direction of the rotation device. Diffusor-spirals 107c-d-e can also do this for the other gases if the nozzles are adjusted in such a way that the resultant direction on the gases into the diffusor has the same direction as the rotation device.If the gases flow in the opposite direction, the spiral inside the diffusor has to be made the opposite way. The diffusors can be with or without stator blades, depending on the diffusor radius. And with stator blades they have to be approximately parallel to the track of the gases/particles.

### Gas in liquid or solid form (ice)

Gas in liquid or solid form (ice) is achieved when the gases in the rotating device has the right adjusted temperature and sufficient pressure, where they can be almost in liquid or gas form.By adjusting the nozzles in adjusted angle to achieve push-force in the rotation direction, the lost energy in the gases by push-force and expansion results in that both the pressure and temperature will fall in the diffusor-spiral. By precise adjustment, in consideration of critical pressure and temperature for the gases, they can become liquid or solid (ice), or a mixture of this. At the end of the diffusor-spirals it can be arranged a combined pump device which both screws/pushes and pumps ice/slush/liquid of the gases along to a higher pressure into module chambers where the gases can be separated to even cleaner gases in evaporation order by indirectly heating, which can be from hydrocarbons on the way to the injection pump 106, or air/water from the surroundings, where the hydrocarbons in gas form can become liquid by indirect heat exchange with the produced liquid-ice-gases. The module gas evaporation chambers are pumped up again when the previous gases have become separated/evaporated. The number of chambers and their size have to be arranged for continuous production. In this way, all the gases from the rotating device after heat exchanging, can also be gathered and fed to a common diffusor-spiral which leads the materials further to a vertical static cyclone, where solid or liquid material rotates to the bottom as the medium is extruded and the gases are separated by evaporation chambers as said. And from the top of said cyclone, cold H₂ is extracted by high/low pressure which could be compressed and conducted to a dedicated channel for accumulating or further cooled and expanded to liquid gas. By-product gases like CO₂ could be screwed/pumped out direct to depositing liquefied or they can be allowed to receive heat from the surroundings under way for depositing. To achieve a favourable temperature in the gases in the rotating device so they can become liquefied or ice after the diffusor-spiral, it is possible to increase the amount of cooling medium/split medium via nozzle 105 where channels lead to a third heat exchanger alike the secondary heat exchanger 108 arranged and attached to it on the inside circle and fastened to the shaft to bind the structure together.It has the same inlet-/outlet channels as was for secondary heat exchanger 108 with each gas channels in the periphery as in the secondary heat exchanger, only that all the gas channels are similar to the hydrogen channel 113 from the split cell, namely that all of the gas channels are enclosed by the split medium channel/water channel inside the third heat exchanger. The gas pipes could be arranged identical as in the secondary heat exchanger 108 and fastened to the shaft. The remaining connections could be as in the secondary heat exchanger as said earlier, to bind the rotation structure together. The gas pipes/channels could be brought out on a side or be divided between the sides of the third heat exchanger. Split medium for splitting in the cell is supplied in channels to the secondary heat exchanger 108 and further on as said earlier. Superfluous split medium which now is heated, is led through channels to for example a slip chamber (said earlier), to a shaft end, or via a radial turbine on the shaft, which increases the pressure, and further out for using the heat and/or to the floating gases for evaporation of them.The water passes an injector which entrains supplied water in adjusted amounts for consumption in the rotation device, before the water is pushed into the rotating device again via the injection nozzle 105.

In addition to the third heat exchanger, or without it, the gases can be conducted in channels after heat exchanging (with water medium as said), where at least one of the gases is conducted to another heat exchanger, where cooled/liquid gas/hydrocarbons from nozzle 106 are supplied in channels into the bottom (periphery) of the heat exchanger. This can be similar to the secondary heat exchanger 108. Heated hydrocarbons can be taken out in a row of channels from the top and further to the hydrocarbon distributor 115. The gas channels can also be brought into the top of the heat exchanger between the outlet to hydrocarbons and the outlet at the bottom. Gas(es) may be conducted further to each nozzle and diffusor where the gases change phase and separate further as said. Instead of using or gathering said liquid hydrocarbons, one can use cooled gases from the process to cool the production gases from the cell in the same way as said hydrocarbons and inert gas.

There can also be a air cooling channel (not shown) which ramifies from the shaft end either in or outside it towards the periphery and into a cooling circle chamber which encloses and is attached to the whole disc structure (except the nozzle circle and the hydrocarbon channel which can be attached to the outside of the cooling circle chamber) with radial plates which can be turned backwards in the rotation direction.There are supply channels between said heat exchangers and towards the shaft, and the air that is heated rises up towards it, and can be conducted out into the shaft end on the opposite side or possible in a channel outside of the shaft., There can be stator blades which attach the vacuum housing to a bearing housing with bearings on the shaft. On the air cooling channel's inlet channel there is attached a pipe which is sealed against the vacuum housing which doesn't rotate and encloses the shaft. The air cooling channel in the rotating device starts to overlap/enclose with little clearance to the inlet pipe which is attached to the vacuum housing. At high inlet speed there will be a low pressure between the pipes. This will also produce a low pressure inside the vacuum housing 101. At the air cooling channel's outlet the pipe channels are enclosed opposite to achieve low pressure in the vacuum housing. There can also be added, in adapted amounts, water-fog into the air cooling channel's inlet channel so the water evaporates and cools further up inside the air cooling circle chamber and the device. The cooling channel's in- and outlet area can be adapted for a given amount of cooling air. In those cases where heat is needed in the cell, it is also possible to arrange a burn chamber at the inlet to the air cooling circle chamber at the periphery, which then becomes a heat circle chamber. When the heated air from the air channel can have higher pressure than at the inlet, the air can execute work by allowing it to pass trough a turbine. This can execute rotation of the device, or other work. The cooling air can also pass via a compressor before the inlet for higher effect on the turbine.

### The regulation nozzle 105, 106 at the shaft's ends.

to the embodiment of the regulation nozzles 105, 106 at the shaft ends, is that they are to be adjusted to deliver added pressurized split medium to a given gas production rate by proper pressure in the rotation device. In the area between the Zimmer rings (which is attached to the needle nozzle) and the nozzle point, low pressure will be created, which pulls the needle nozzle into a favourable position, and the needle nozzle is in balance to the pressure, by means of adjustable springs in the nozzle-housing 105, 106. If the pressure is too high in the device, the nozzle and Zimmer ring will be pressed back and simultaneously partly or totally close the medium flow through the nozzles. As the pressure lowers in the device under production, the pressure will be lowered within the Zimmer rings and the nozzle point 105,106 and it will gradually fall back to the favourable position and again increase the injection. This method gives minimal rotation resistance and wear when the nozzle is not in contact, but not least an automatic mechanical adjustment of the supply of split material to the split cell.

### Split cell 110

The embodiment of the split cell 109 is centred in the circle of the primary heat exchanger 110 and they are attached to each other at the bottom with longitudinal cantilevered plates (at the bottom of the slag channel 131) which lie against the hydrocarbon distributor 115 which also is like a pipe (along the circle on the primary heat exchanger 109), which the plates is arranged to, on each side of each top. And there is a row of holes/channels between the arrangements. It is also a row of holes in the sloping plates inside the primary heat exchanger wall 109 so the split medium can pass to the region around the hydrocarbon distributor 115, and further be pushed into the split cell through the holes between the sloping plate and the hydrocarbon distributor 115. The hydrocarbon distributor is also equipped with a row of holes along the periphery (border) which is adjusted to lead the right amount of hydrocarbon at proper pressure out to the split medium which it will float up in, and together with it through the holes to the split cell 110 between the electrodes 111. The electrodes are in the centre as two parallel ring shaped plates, which each in the periphery is arranged against the top of each own sloping plates which also the hydrocarbon distributor 115 is attached to on the opposite side of the sloping plates. When the rotating device is electrical conductive, one of the electrodes can be in contact with the structure and the one shaft end 112b where negative voltage is connected, and the other electrode is electrically insulated between the structure, but in contact with an insulated electric conductor to an insulated slip ring at the other end of the shaft where positive voltage is connected 112a. In the event of no electric conductive structure, both of the electrodes has to be supplied with current with electrically insulated conductors like the line from 112a, which will be identical for the other electrode against the contact 112b.
Between the electrodes 111 (at the periphery of them) and the sloping plates which the electrodes is attached to, there is a row of short axial channels to improve the circulation in the cell and to reduce the heat transmission from the electrodes over to the rest of the structure. The electrodes could in advantage be perforated or porous, which is favourable both to improve the heat exchange, and to keep the shape better by heat expansion, but also for bigger contact surface by electrolysis and catalyzing when the electrodes simultaneously are catalytic. The electrodes can be made of an electric conductive material which is highly heat-resistant, corrosion-resistant, with low temperature expansion coefficient, in pure metal, alloy, composite, ceramic or nano technology material.
When the split cell 110 will create buoyancy in the split material which surrounds it, it can be constructed to be completely or partially in buoyancy balance at production temperature, to decrease the strains on the structure. Simultaneously the cell walls could be relative thin and in a material which is not electric conductive which will simultaneously send the heat radiation from the cell through the walls to the primary heat exchanger 109 and to the split medium on the other side of the wall on its way to the cell.
The hydrocarbon distributor 115 could be shaped in a favourable volume so the buoyancy of it is partly supporting/strengthening the structure inside the primary heat exchanger 109, and at temperature expansion of the electrode discs 111, and with sufficient flexibility and strength in their mounting area, and wherein the electrodes 111 at the same time are centred and in balance all the time. The pressure in the hydrocarbon distributor 115 has to be larger than the pressure outside it, so that water and other material aren't forced into it, but also to supply the cell. But the holes in the hydrogen carbon distributor 115 can have check valves to prevent the said problems. The row of holes in it could be placed anywhere, but the holes have to be in the same distance from the shaft to get an even flow between them.
At really high pressure and sufficient cooling of the gases after split, they can be liquefied in the rotating unit. This first happens to the heavy gases, for example CO₂, which under high pressure and low temperature can, in that case in the CO₂-channel 118a-b, sink out to the periphery and into the density regulating valve 125 and further out through the nozzle 114d to the spiral-diffusor 107b and the accumulator 125, still liquefied and pressurized. Therefore it could be more favourable to keep the temperature high enough to both achieve favourable catalyzing in the CO₂-channel 118a-b and that the CO₂ is led out as said earlier. But by adjusting the production of all gas in the cell, the oxygen channel 118a-b could be enclosed by dedicated heat exchangers on each side of the primary heat exchanger, externally similar to the others in the circle, but internally it is a pipe where the corresponding oxygen-/CO₂-channel is raised on each side to come above the water mirror in the split cell 110. And it comes in on the sides in a channel in the heat exchanger where the split medium from the nozzle 105 enters from multiple channels at the bottom from the bottom (periphery) along the heat exchanger and is thereafter led in a channel from the top of it to the top of the secondary heat exchanger 108. Simultaneously, a channel from the oxygen-/CO₂- channel exits through the side of its heat exchanger to a channel which encloses the hydrocarbon channel (said earlier, cooled) where there on the enclosed channel are multiple outlet channels on the top and bottom. Outlet channels on the top leads H₂ residue, which is led directly to the same nozzle row/circle as hydrogen from the hydrogen channel 113, or with the hydrogen channel 113 via adjusted injectors as said. Outlet channels at the bottom (periphery) is conducted directly towards nozzles where the cooled by-product gases (CO₂, CO, O₂ etc.) are sinking outwards to the periphery, where they are conducted out as said, at high rotation and under high pressure.
The hydrogen channels 113, 120 could be gathered together and conducted out via an adjusted injector from channel 113 which at a high pressure sucks into it an adjusted amount of hydrogen from the channel 120 with lower pressure. The pressure in the channel will be arranged to remain constant so that the necessary water/steam mirror is held at a favourable point up in the CO₂-channel 118a. In this case it can be at least two gas outlet channels.
With only to gas outlet channels, (when both gases is in gas phase) the inlet channels could be led in from each end of the shaft via slip chambers which enclose and are sealed around the shaft. Channels on the shaft inside the slip chamber ramify into the inlet channel outside the centre of the shaft. Each shaft end is now going to be equipped with separate needle nozzles at the centre thereof. The nozzles are attached to the channel where hydrogen in the channel 113+120 (injected as said above) leads to one of the shaft's ends and the oxygen/CO₂ channel leads oxygen or CO₂ (depending on the production method) to the other shaft's end. There is a zimmerring enclosing each of the nozzles, which is attached to a adjusted pipe diffusor. The nozzles can be adjusted to a definite favourable production pressure (said earlier) whereupon the gas will be pressed out through the needle nozzle on each shaft end with high speed into the diffusor where the speed is reduced and the static pressure is increased and the gases can be conducted further as said earlier.

### The suspended bearings 112a-b

The bearing suspensions of the rotating unit can be with roller- or ball-bearings, fluid/gas slide bearings or super conductive electromagnets where there is a seal against the shaft on both sides of the magnets on each of the shaft ends so that it is sealed around the vacuum housing and the magnets. Cooling of the magnets could be allowed with expansion of some of the produced gases or the already cooled gases. The construction of the shaft allows the magnet bearings to have a radial and axial support at one of the shaft ends and only be radial on the other, this applies for all of bearing options. The voltage to the electrodes 111 can be conducted through the super conductive electromagnets with a necessary voltage exchange (which has less importance for the hydrogen production) and the magnets can then also be adapted to form an electric motor or generator working to either maintain rotation, or produce electricity when it is a high push-force from the gas out of the nozzles to the diffusor-spiral at the periphery and said turbines. At the in- and outlet channels only in the shaft, super conductive magnets could also support each side of the slag nozzle 114d along the periphery of the rotation disc structure for continuous counteract of some of the forces that is applied on the device during rotation and production, so that the rotation speed and pressure on the gases out increases.
While the embodiment of the invention illustrated in fig. 1 separates the produced gases into multiple channels, the device could be equipped with more channels which allows each gas component to separate into separate channels, fore instance hydrogen-, oxygen, carbon monoxide- and carbon dioxide channels, and the top (closest shaft) of each rise channel to the gases can fine separate out residue of H₂ alike the transition from oxygen channels 118a and H₂ channel 120 and oxygen (by steam reforming it is more by-product gases) separates out in the oxygen channel (eventually CO₂ channel) 118c where the heavy gases are connected along after density, alike as said, and the connections should be before the secondary heat exchanger 108.
The rotation device has to be produced of materials with the essential strength to resist the forces which are created at a high speed rotation. The structure could have in advantage low density to reduce said forces. The structure can be designed in metal, with the electrodes insulated from the rest of the structure, or from a ceramic material, nano technology material, composite material or a combination of these. The centrifugal forces are determined by the rotation speed and the diameter of the rotating unit, which is adjusted to the forces allowed for the materials which is used.
By steam reforming, pressure and temperature should not be over/under the optimal functional limit of the catalyzers which are used. To reduce the rotation speed and the load placed on the disc structure, the rotating unit described so far, could increase the pressure of the split fluids at inlet. As following the split unit could be driven on a lower rotation speed which means lower centrifugal force which is applied to the disc structure.

To avoid that the electrodes disintegrated by crystallization, the polarity of the electrodes could be changed in intervals, and it is not necessary to switch gas outlet channels in the device.

The figure must be seen as schematic drawings illustrating the principles of the invention only, and not necessarily showing real world physical realizations of the invention. The invention may be realized using many different materials and arrangements of its components. Such realizations should be within the abilities of any person skilled in the art.

## Claims

1. A device for producing hydrogen in an electric field, said device including a vacuum protection housing (101),
a disc-like arrangement enclosed by said vacuum protection housing (101),
a shaft(122) fastened to said disc-like arrangement, wherein the shaft (122) is suspended in sealed bearings (102a, 102b) fastened to the vacuum protection housing (101),
one or more split cells (110) arranged at the periphery of the disc-like arrangement, said split cell(s) containing first and second electrodes which are supplied with electricity,
inlet channels arranged in the shaft for supplying split medium out to said one or more split cells (110),
**characterized in that** said device further includes diffusor-spirals (107b - e) fastened to the vacuum protection housing (101), the diffusor-spirals being arranged around the disc-like arrangement,
separate channels for produced gas and material residue from the cell(s) (110), said channels leading to nozzles (114a - d), which are arranged inside said diffusor-spirals (107b - e) with little clearance between the nozzles and the diffusor-spirals (107b - e), the disc-like arrangement being arranged to rotate from gas pressure from the produced gas which is emitted from the nozzles (114a - d).

2. A device according to claim 1, wherein said split medium contain hydrocarbons.

3. A device according to claim 1 or 2, wherein the device is arranged to produce hydrogen, oxygen and possible carbon dioxide in liquid and/or solid state.

4. A device according to claim 3, wherein the device includes a common outlet channel for produced gas.

5. A device according to claim 3 or 4, wherein the device is adapted to fine separate the produced gases by fractionated evaporation.

6. A device according to claim 1, wherein one or more self-adjusting nozzles (105, 106) is arranged in said inlet channels.

7. A device according to claim 1, wherein one of said electrodes is arranged in constant electric contact with the disc-like arrangement.

8. A device according to claim 1, wherein a secondary heat exchanger (108) is arranged in the inlet channel(s) followed by a primary heat exchanger (109) which encloses the split cell (110), an additional channel arranged in the interval space between the primary heat exchanger and the secondary heat exchanger (108), for conducting split medium toward the periphery on each of the outer sides of the split cell (110), wherein split medium is conducted to the split cell (110) along the periphery and up between the electrodes (111).

9. A device according to claim 1, wherein inert gas is supplied to the cell.

10. A device according to claim 1, further including means for transforming energy from surplus rotation force.

11. A device according to claim 1 or 4, wherein a cyclone-separator is connected to the diffusor-spiral.

12. A device according to claim 1, further including a cooling arrangement arranged in front of or after said disc-like arrangement.

13. A device according to claim 1 or 10, wherein the disc-like arrangement is connected to at least one turbine.

14. A device according to claim 1 or 13, wherein the disc-like arrangement is connected to an electric generator.

15. A method for producing hydrogen with a device as claimed in claim 8 and/or claim 12, including the steps of supplying a split medium to at least one electrolysis cell (110),
**characterized in**
cooling and separating gas produced by the cell(s) (110) under pressure,
supplying produced gas and material residue from the cell (s) (110) to nozzles (114a - c), and
forcing the least one electrolysis cell (110) to rotate from the gas pressure from the produced gas which is emitted from the nozzles (114a - d).

16. A method according to claim 15, wherein inert gas is supplied to the cell (s) (110).

## Patentansprüche

1. Vorrichtung zum Herstellen von Wasserstoff in einem elektrischen Feld,
wobei die Vorrichtung ein Vakuumschutzgehäuse (101) aufweist,
eine scheibenartige Anordnung, die vom Vakuumschutzgehäuse (101) umschlossen ist,
eine Welle (122), die an der scheibenartigen Anordnung befestigt ist, wobei die Welle (122) in abgedichteten Lagern (102a, 102b) gelagert ist, die am Vakuumschutzgehäuse (101) befestigt sind,
eine oder mehrere Spaltungszellen (110), die an der Peripherie der scheibenartigen Anordnung angeordnet sind, wobei die Spaltungszelle(n) erste und zweite Elektroden enthalten, die mit Elektrizität versorgt werden,
Einlasskanäle, die in der Welle zum Zuführen eines Spaltungsmediums nach außen an die eine oder mehreren Spaltungszellen (110) angeordnet sind,
**dadurch gekennzeichnet, dass** die Vorrichtung weiterhin Diffusorspiralen (107b - e) aufweist, die am Vakuumschutzgehäuse (101) befestigt sind, wobei die Diffusorspiralen um die scheibenförmige Anordnung herum angeordnet sind,
gesonderte Kanäle für hergestelltes Gas und Materialrückstände aus der/den Zelle(n) (110), wobei die Kanäle zu Düsen (114a - d) führen, welche in den Diffusorspiralen (107b - e) mit geringem Abstand zwischen den Düsen und den Diffusorspiralen (107b - e) angeordnet sind, wobei die scheibenartige Anordnung dafür angeordnet ist, sich durch Gasdruck vom hergestellten Gas zu drehen, das aus den Düsen (114a - d) emittiert wird.

2. Vorrichtung nach Anspruch 1, wobei das Spaltungsmedium Kohlenwasserstoffe enthält.

3. Vorrichtung nach Anspruch 1 oder 2, wobei die Vorrichtung zum Herstellen von Wasserstoff, Sauerstoff und möglichem Kohlendioxid im flüssigen und/oder festen Aggregatzustand angeordnet ist.

4. Vorrichtung nach Anspruch 3, wobei die Vorrichtung einen gemeinsamen Auslasskanal für hergestelltes Gas aufweist.

5. Vorrichtung nach Anspruch 3 oder 4, wobei die Vorrichtung zum Feintrennen der hergestellten Gase durch fraktionierte Verdampfung ausgelegt ist.

6. Vorrichtung nach Anspruch 1, wobei eine oder mehrere selbsteinstellende Düsen (105, 106) in den Einlasskanälen angeordnet sind.

7. Vorrichtung nach Anspruch 1, wobei eine der Elektroden im konstanten elektrischen Kontakt mit der scheibenartigen Anordnung angeordnet ist.

8. Vorrichtung nach Anspruch 1, wobei ein sekundärer Wärmetauscher (108) im Einlasskanal/in den Einlasskanälen angeordnet ist, gefolgt von einem primären Wärmetauscher (109), der die Spaltungszelle (110) umschließt, wobei ein zusätzlicher Kanal im Intervallraum zwischen dem primären Wärmetauscher und dem sekundären Wärmetauscher (108) angeordnet ist, zum Führen von Spaltungsmedium zur Peripherie an jeder der Außenseiten der Spaltungszelle (110), wobei Spaltungsmedium zur Spaltungszelle (110) entlang der Peripherie und nach oben zwischen die Elektroden (111) geführt wird.

9. Vorrichtung nach Anspruch 1, wobei inertes Gas der Zelle zugeführt wird.

10. Vorrichtung nach Anspruch 1, weiterhin aufweisend Mittel zum Transformieren von Energie aus überschüssiger Drehkraft.

11. Vorrichtung nach Anspruch 1 oder 4, wobei ein Fliehkraftabscheider mit der Diffusorspirale verbunden ist.

12. Vorrichtung nach Anspruch 1, weiterhin aufweisend eine Kühlanordnung, die vor oder nach der scheibenartigen Anordnung angeordnet ist.

13. Vorrichtung nach Anspruch 1 oder 10, wobei die scheibenartige Anordnung mit mindestens einer Turbine verbunden ist.

14. Vorrichtung nach Anspruch 1 oder 13, wobei die scheibenartige Anordnung mit einem elektrischen Generator verbunden ist.

15. Verfahren zum Herstellen von Wasserstoff mit einer Vorrichtung nach Anspruch 8 und/oder Anspruch 12, aufweisend die Schritte des Zuführens eines Spaltungsmediums an mindestens eine Elektrolysezelle (110),
**gekennzeichnet durch**
Kühlen und Trennen von Gas, das von der/den Zelle(n) (110) hergestellt wird, unter Druck,
Zuführen von hergestelltem Gas und Materialrückständen aus der/den Zelle(n) (110) an Düsen (114a - c), und
Zwingen der mindestens einen Elektrolysezelle (110), sich durch den Gasdruck vom hergestellten Gas zu drehen, das aus den Düsen (114a - d) emittiert wird.

16. Verfahren nach Anspruch 15, wobei inertes Gas der/den Zelle(n) (110) zugeführt wird.

## Revendications

1. Dispositif pour produire de l'hydrogène dans un champ électrique, ledit dispositif comprenant un logement de protection sous vide (101), un agencement de type disque enfermé par ledit logement de protection sous vide (101),
un arbre (122) fixé audit agencement de type disque,
dans lequel l'arbre (122) est suspendu dans des paliers étanches (102a, 102b) fixés au logement de protection sous vide (101),
une ou plusieurs cellules de division (110) agencées à la périphérie de l'agencement de type disque, ladite ou lesdites cellules de division contenant des première et seconde électrodes qui sont alimentées avec de l'électricité,
des canaux d'entrée agencés dans l'arbre pour fournir un milieu de division auxdites une ou plusieurs cellules de division (110),
**caractérisé en ce que** ledit dispositif comprend en outre des spirales de diffusion (107b-e) fixées au logement de protection sous vide (101), les spirales de diffusion étant agencées autour de l'agencement de type disque,
des canaux séparés pour un gaz produit et un résidu de matériau provenant de la ou des cellules (110), lesdits canaux amenant à des buses (114a - d), qui sont agencées à l'intérieur desdites spirales de diffusion (107b-e) avec peu d'espace entre les buses et les spirales de diffusion (107b-e), l'agencement de type disque étant agencé pour tourner grâce à une pression gazeuse provenant du gaz produit qui est émis à partir des buses (114a-d).

2. Dispositif selon la revendication 1, dans lequel ledit milieu de division contient des hydrocarbures.

3. Dispositif selon la revendication 1 ou 2, dans lequel le dispositif est agencé pour produire de l'hydrogène, de l'oxygène et éventuellement du dioxyde de carbone dans un état liquide et/ou solide.

4. Dispositif selon la revendication 3, dans lequel le dispositif comprend un canal de sortie commun pour le gaz produit.

5. Dispositif selon la revendication 3 ou 4, dans lequel le dispositif est adapté pour effectuer une séparation fine des gaz produits par évaporation fractionnée.

6. Dispositif selon la revendication 1, dans lequel une ou plusieurs buses à auto-ajustement (105, 106) sont agencées dans lesdits canaux d'entrée.

7. Dispositif selon la revendication 1, dans lequel une desdites électrodes est agencée en contact électrique constant avec l'agencement de type disque.

8. Dispositif selon la revendication 1, dans lequel un échangeur de chaleur secondaire (108) est agencé dans le ou les canaux d'entrée suivi d'un échangeur de chaleur primaire (109) qui enferme la cellule de division (110), un canal supplémentaire étant agencé dans l'espace d'intervalle entre l'échangeur de chaleur primaire et l'échangeur de chaleur secondaire (108), pour acheminer le milieu de division vers la périphérie sur chacune des faces externes de la cellule de division (110), dans lequel le milieu de division est acheminé vers la cellule de division (110) le long de la périphérie et entre les électrodes (111).

9. Dispositif selon la revendication 1, dans lequel un gaz inerte est fourni à la cellule.

10. Dispositif selon la revendication 1, comprenant en outre un moyen pour transformer de l'énergie à partir de la force de rotation en surplus.

11. Dispositif selon la revendication 1 ou 4, dans lequel un séparateur à cyclone est raccordé à la spirale de diffusion.

12. Dispositif selon la revendication 1, comprenant en outre un agencement de refroidissement agencé devant ou après ledit agencement de type disque.

13. Dispositif selon la revendication 1 ou 10, dans lequel l'agencement de type disque est raccordé à au moins une turbine.

14. Dispositif selon la revendication 1 ou 13, dans lequel l'agencement de type disque est raccordé à un générateur électrique.

15. Procédé de production d'hydrogène avec un dispositif selon la revendication 8 et/ou la revendication 12, comprenant les étapes de fourniture d'un milieu de division à au moins une cellule d'électrolyse (110),
**caractérisé par**
le refroidissement et la séparation du gaz produit par la ou les cellules (110) sous pression,
la fourniture du gaz produit et d'un résidu de matériau provenant de la ou des cellules (110) à des buses (114a - c), et
le fait de forcer l'au moins une cellule d'électrolyse (110) a tourné grâce à la pression gazeuse provenant du gaz produit qui est émis à partir des buses (114a-d).

16. Procédé selon la revendication 15, dans lequel un gaz inerte est fourni à la cellule ou aux cellules (110).
